# EUROPÄISCHE PATENTSCHRIFT

(11) **EP 0 491 159 B1**
(45) Veröffentlichungstag und Bekanntmachung des Hinweises auf die Patenterteilung: **28.06.1995**
(21) Anmeldenummer: 91119210.2
(22) Anmeldetag: 12.11.1991
(51) Int. Cl.: B60T 8/34

(54) **Schlupfgeregelte hydraulische Bremsanlage, insbesondere Kraftfahrzeuge**
Hydraulic antilock brake system for vehicles
Système de freinage antiblocage hydraulique pour véhicules

(30) Priorität: 17.12.1990 DE 4040277
(43) Veröffentlichungstag der Anmeldung: 24.06.1992
(73) Patentinhaber: ROBERT BOSCH GMBH, 70442 Stuttgart (DE)
(72) Erfinder: Rittmansberger, Norbert, Dr.-Ing., W-7000 Stuttgart 1 (DE); Maisch, Wolfgang, Dr.-Ing., W-7141 Schwieberdingen (DE)

(56) Entgegenhaltungen:
- DE-A- 3 913 352
- DE-B- 1 168 718

## Beschreibung

### Stand der Technik

Die Erfindung geht aus von einer schlupfgeregelten hydraulischen Bremsanlage nach der Gattung des Hauptanspruchs.

Es ist schon eine derartige Bremsanlage bekannt (DE-OS 39 13 352), bei der in einer ausgangsseitig einer Pumpe angeordneten Dämpferkammer ein elastomerer Körper aufgenommen ist. Dieser soll dazu dienen, durch instationäre Strömungsvorgänge in der Bremsanlage hervorgerufene Druckpulsationen zu dämpfen, so daß eine insbesondere durch die Pumpe hervorgerufene Geräuschentwicklung gemindert wird. Der Dämpferkörper soll aus heterogenen Werkstoffen bestehen, so daß durch die Kombination verschiedener Werkstoffeigenschaften der Verformungsgrad abhängig von der hydraulischen Druckbeaufschlagung festgelegt werden kann. Hierdurch soll beispielsweise ein degressiver Druckanstieg verwirklicht werden, so daß die Volumenaufnahme im Hydraulikkreis während einer ungeregelten Normalbremsung möglichst gering bleibt. Dies hat im Bereich relativ niedriger Bremsdrücke eine ungenügende Dämpfungswirkung zur Folge. Da in Bremsanlagen Drücke von mehr als 200 bar auftreten können, werden an das Verformungsverhalten des Dämpfungskörpers außerordentlich hohe, bisher nicht zu erfüllende Anforderungen gestellt. So setzt die bei hohen Drücken eintretende Inkompressibilität des Körpers der Dämpfungswirkung eine Grenze, d. h. die in diesem Druckbereich auftretenden und besonders nachteiligen Druckpulsationen sind nicht mehr verminderbar.

### Vorteile der Erfindung

Die erfindungsgemäße Bremsanlage mit dem kennzeichnenden Merkmal des Hauptanspruchs hat demgegenüber den Vorteil, daß durch die Verwendung von zwei oder mehr schwingungsdämpfenden Körpern die Wirkungsbreite über den gesamten Druckbereich erstreckt werden kann. Es ist lediglich erforderlich, in Abhängigkeit von der über den Druckbereich gewünschten Dämpfungswirkung Körper mit dem entsprechenden Kompressionswiderstand in die Dämpferkammer einzufügen, so daß sich die Körper in ihrer Dämpfungswirkung gegenseitig ergänzen oder ein Körper wirksam ist, wenn der andere oder die anderen Körper noch nicht oder nicht mehr dämpfend wirken. Außerdem zeichnen sich die Körper durch günstige Herstellbarkeit aus.

Durch die in den Unteransprüchen aufgeführten Maßnahmen sind vorteilhafte Weiterbildungen und Verbesserungen der im Hauptanspruch angegebenen Bremsanlage möglich.

Die im Anspruch 2 angegebene Maßnahme ist insofern vorteilhaft, als der Kompressionswiderstand, den der allseitig von Bremsflüssigkeit als Druckmittel ausgesetzte Körper ausübt, einstellbar ist, z. B. durch den vom Werkstoff vorgegebenen Verformungswiderstand bzw. die vorgegebene Steifigkeit des Körpers sowie durch die Kompressibilität des in den Zellen eingeschlossenen Gasvolumens.

Diese Einstellung ist in vorteilhafter Weise bei dem im Anspruch 3 offenbarten Werkstoff erzielbar, der in einem weiten Härtebereich herstellbar sowie schäumbar ist und eine gute Beständigkeit gegen Bremsflüssigkeit hat.

### Zeichnung

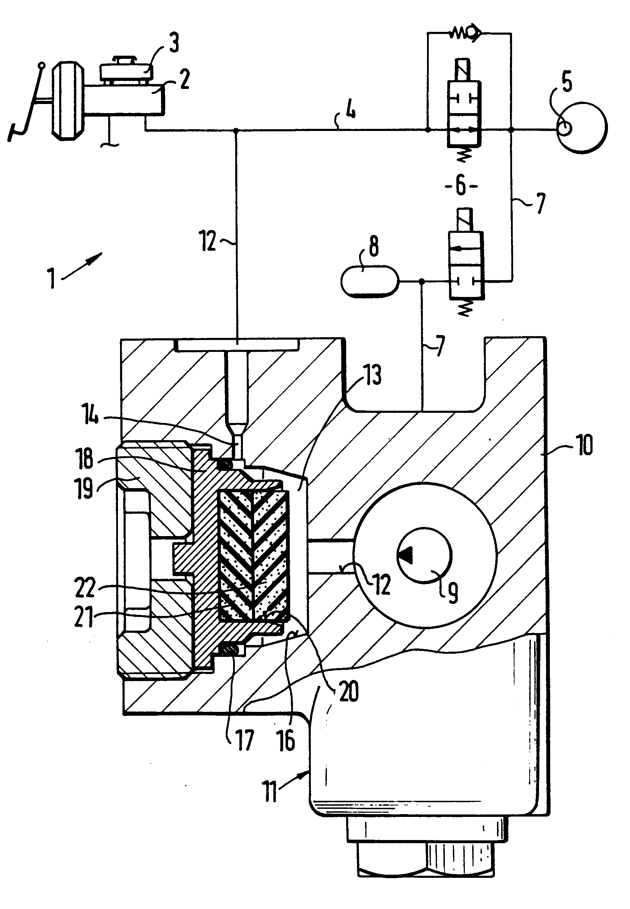

Ein Ausführungsbeispiel der Erfindung ist in der Zeichnung bei einer teils schematisch wiedergegebenen hydraulischen Bremsanlage mit einer Dämpferkammer vereinfacht dargestellt und in der nachfolgenden Beschreibung näher erläutert.

### Beschreibung des Ausführungsbeispiels

Die in der Zeichnung dargestellte hydraulische Bremsanlage 1 hat einen pedalbetätigbaren Hauptbremszylinder 2 mit einem Druckmittelvorratsbehälter 3. Vom Hauptbremszylinder 2 geht wenigstens eine Bremsleitung 4 aus für die Übertragung vom im Hauptbremszylinder erzeugten Bremsdruck auf wenigstens eine Radbremse 5. Der Radbremse 5 ist eine Drucksteuerventilanordnung 6 zugeordnet, mit der beim Auftreten von Schlupf am der Radbremse 5 zugeordneten Fahrzeugrad Phasen für Druckabbau, Druckhalten und Druckabbau während des Bremsbetriebes schaltbar sind. Bei einer Druckabbauphase ist Druckmittel aus der Radbremse 5 durch eine Rückführleitung 7 in eine Speicherkammer 8 übertragbar. An die Rückführleitung 7 ist eine symbolisch dargestellte Hubkolbenpumpe 9 in einem Gehäuse 10 eines Hydroaggregats 11 angeschlossen. Von der das Druckmittel aus der Speicherkammer 8 pulsierend fördernden Hubkolbenpumpe 9 führt eine Förderleitung 12 zur Bremsleitung 4. An die Förderleitung 12 ist eine Dämpferkammer 13 angeschlossen, der in Strömungsrichtung des Druckmittels eine in der Förderleitung liegende Drosselstelle 14 folgt.

Die Dämpferkammer 13 ist als die Förderleitung 12 im Gehäuse 10 des Hydroaggregats 11 unterbrechende Bohrung 16 ausgebildet. Die Dämpferkammer 13 hat ein Aufnahmevolumen für Druckmittel von einigen Kubikzentimetern. Sie ist mit einem unter Verwendung eines O-Ringes 17 abgedichteten Deckel 18 und einer Verschlußschraube 19 druckdicht nach außen abgeschlossen.

Der rotationssymmetrisch ausgebildete Deckel 18 besitzt zuströmseitig eine relativ große Ausnehmung 20, in welcher z. B. zwei elastomere Körper 21 und 22 aufgenommen sind. Die Körper 21 und 22 haben die Form von Kreiszylindern und bestehen z. B. aus einem geschäumten Ethylen-Propylen-Dien-Kautschuk (EPDM), einem gegen das Druckmittel (Bremsflüssigkeit) beständigen Werkstoff. Außerdem haben die beiden Körper 21 und 22 eine homogene zellige Struktur, d. h. sie besitzen einen bestimmten Volumenanteil an geschlossenen, gasgefüllten Zellen. Die Zellen haben überwiegend eine Größe von weniger als 1/10 mm. Das von dem erwähnten, gummielastischen Werkstoff gebildete Gerüst der Körper 21 und 22 hat eine bestimmte Härte. Diese Härte kann bei beiden Körpern 21 und 22 verschieden groß eingestellt sein. Ebenso kann der Anteil der Zellen in beiden Körpern 21 und 22 unterschiedlich groß sein. Die beiden Körper 21 und 22 setzen daher bei einer Beaufschlagung durch das von der Hubkolbenpumpe 9 geförderte Druckmittel einen unterschiedlich großen Kompressionswiderstand entgegen, der zum einen durch den Verformungswiderstand bzw. die Steifigkeit des gummielastischen Werkstoffs und zum anderen durch die Kompressibilität des in den Zellen eingeschlossenen Gases bestimmt ist.

Die beiden Körper 21 und 22 wirken auf das in die Dämpferkammer 13 geförderte Druckmittel schwingungsdämpfend: Der Körper 21, der z. B. einen niedrigeren Kompressionswiderstand hat als der Körper 22, vermag daher bei niedrigen Drücken Volumenstromspitzen durch seine Kompressibilität auszugleichen. Wenn der Druck ansteigt und der Körper 21 den Zustand seiner Inkompressibilität erreicht, wird der andere, einen hohen Kompressionswiderstand aufweisende Körper 22, schwingungsdämpfend wirksam.

Durch die Verwendung von zwei oder mehr in ihrem Kompressionswiderstand abgestimmten Körpern 21, 22 in der Dämpferkammer 13 lassen sich unterschiedliche Kennlinien der Dämpferwirkung über den bei der Bremsanlage 1 in Frage kommenden Druckbereich erzielen. Diese Kennlinien können mit zunehmendem Druck progressiv, weitgehend linear oder degressiv verlaufen. Die im Ausführungsbeispiel dargestellten Körper 21 und 22 wird man zweckmäßigerweise aus Plattenmaterial austrennen.

## Patentansprüche

1. Schlupfgeregelte hydraulische Bremsanlage (1), insbesondere für Kraftfahrzeuge, mit einem Hauptbremszylinder (2), von dem wenigstens eine zu Radbremsen (5) führende Bremsleitung (4) ausgeht, mit einer Druckmittel pulsierend fördernden Pumpe (9), von deren Ausgangsseite eine Förderleitung (12) mit einer Drosselstelle (14) zur Bremsleitung (4) führt, und mit einer zwischen der Pumpe (9) und der Drosselstelle (14) an die Förderleitung (12) angeschlossenen Dämpferkammer (13) in Form einer in einem Hydroaggregat (11) ausgebildeten, nach außen abgeschlossenen Bohrung (16), in welche die Förderleitung (12) bodenseitig mündet und in der wenigstens ein schwingungsdämpfender, elastomerer Körper (21, 22) aufgenommen ist, gekennzeichnet durch die Merkmale:
- die Förderleitung (12) ist vom Umfang der Bohrung (16) ausgehend zur Bremsleitung (4) geführt,
- in der Bohrung (16) ist ein deckelförmiges Bauteil (18) mit einer gegen die zuströmseitige Mündung der Förderleitung (12) offenen Ausnehmung (20) lagefest aufgenommen,
- es sind wenigstens zwei schwingungsdämpfende, scheibenförmige Körper (21, 22) mit unterschiedlichen Kompressionswiderstand in der Ausnehmung (20) des Bauteils (18) angeordnet.

2. Bremsanlage nach Anspruch 1, dadurch gekennzeichnet, daß die aus einem gummielastischen Werkstoff bestehenden Körper (21, 22) verschiedene Härte und/oder einen unterschiedlichen Volumenanteil geschlossener, gasgefüllter Zellen haben.

3. Bremsanlage nach Anspruch 1 oder 2, dadurch gekennzeichnet, daß die Körper (21, 22) aus einem geschäumten Ethylen-Propylen-Dien-Kautschuk (EPDM) bestehen.

## Claims

1. Hydraulic anti-lock brake system (1), especially for motor vehicles, with a brake master cylinder (2), from which extends at least one brake conduit (4) leading to wheel brakes (5), with a pump (9) which conveys pressure medium in a pulsating manner and from the outlet side of which a feed conduit (12) with a throttle point (14) leads to the brake conduit (4), and with a damper chamber (13) connected to the feed conduit (12) between the pump (9) and the throttle point (14) and taking the form of a bore (16) which is formed in a hydraulic unit (11) and is closed off relative to the outside and into which the feed conduit (12) opens on the bottom side and in which at least one vibration-damping elastomeric body (21, 22) is received, characterized by the features:
- the feed conduit (12) is guided from the circumference of the bore (16) to the brake conduit (4),
- a cover-like component (18) with a recess (20) open towards the inflow-facing mouth of the feed conduit (12) is received fixedly in position in the bore (16),
- at least two vibration-damping disc-shaped bodies (21, 22) having a different compression resistance are arranged in the recess (20) of the component (18).

2. Brake system according to Claim 1, characterized in that the bodies (21, 22) consisting of an elastomeric material have a different hardness and/or a different volume proportion of closed gas-filled cells.

3. Brake system according to Claim 1 or 2, characterized in that the bodies (21, 22) consist of a foamed ethylene-propylene-diene rubber (EPDM).

## Revendications

1. Système de freinage (1), hydraulique, anti-patinage, notamment pour véhicule automobile, comprenant un maître-cylindre (2), relié par une conduite de frein (4) à au moins un frein de roue (5), une pompe (9) fournissant le fluide sous pression de manière impulsionnelle, dont le côté de sortie est relié à une conduite de transfert (12) avec un point d'étranglement (14) à la conduite de frein (4) et une chambre d'amortissement (13) branchée entre la pompe (9) et le point d'étranglement (14) à la conduite de transfert (12), sous la forme d'un perçage (16) réalisé dans l' ensemble hydraulique (11), ce perçage étant fermé vis-à-vis de l'extérieur et la conduite de transfert (12) débouchant dans le fond de ce percage recevant au moins un élément élastomère (21, 22) amortissant les oscillations, système caractérisé en ce que :
- la conduite de transfert (12) part de la périphérie du perçage (16) pour arriver dans la conduite de frein (4),
- une pièce (18) en forme de couvercle est prévue dans le perçage (16) et possède une cavité (21), ouverte vers l'orifice de la conduite de transfert (12) du côté de l'alimentation,
- au moins deux éléments (21, 22) en forme de disques, amortissant les oscillations, et ayant une résistance à la compression différente, sont logés dans la cavité (20) de la pièce (18).

2. Système de freinage selon la revendication 1, caractérisé en ce que les éléments (21, 22) réalisés en un matériau ayant l'élasticité du caoutchouc, ont une dureté différente et/ou au moins une fraction volumique différente de cellules fermées remplies de gaz.

3. Installation de frein selon la revendication 1 ou 2, caractérisée en ce que les éléments (21, 22) sont en un caoutchouc éthylène-propylène-diène expansé (EPDM).
